# EUROPEAN PATENT APPLICATION

(11) **EP 1 577 520 A2**
(43) Date of publication of application: **21.09.2005**
(21) Application number: 05396008.4
(22) Date of filing: 17.02.2005
(51) Int. Cl.: F02C 6/12, F01D 25/14

(54) **Turbo compressor arrangement for piston engines**

(30) Priority: 17.03.2004 FI 20045080
(71) Applicant: Wärtsilä Finland Oy, 65380 Vaasa (FI)
(72) Inventor: Hilakari, Vesa, 21500 Piikkiö (FI)
(74) Representative: Finnilä, Kim Larseman

(57) **Abstract**

A turbo compressor arrangement in connection with a piston engine (2) comprising a compressor unit (1.1) and a turbine unit (1.2) connected to each other, in which the turbine unit (1.2) comprises a turbine wheel (1.19) having blades (1.9) and a turbine housing (1.15) enclosing the turbine wheel and the blades at a distance therefrom. A cooling space (1.16) for a cooling medium has been arranged in the turbine housing (1.15), essentially near the tips of the turbine blades (1.9) for a limited cooling of the turbine housing and for preventing the forming of crust.

## Description

The present invention relates to an arrangement according to the preamble of claim 1 and a method according to the preamble of claim 7.

In engine technology it is known to turbochargers, in which the energy of the exhaust gas provides the power for running the compressor. The exhaust gases are hot and it is therefore known to cool the turbine unit of the compressor. However, cooling the turbine unit will cause cooling of the exhaust gas, which is disadvantageous for the process. Utilising gases in a lower temperature in, e.g. heat recovery boiler is not very advantageous, for example in the production of steam a sufficiently high temperature of steam is not necessarily achieved. Further, an extensive cooling system makes the apparatus complicated. Thus, it is preferable to use uncooled turbo compressor apparatuses. Forming of crust has, however, been noticed as a problem. Forming of crust is specially problematic in the clearance between the blades of the turbine and the turbine housing and especially when heavy fuel oil is used as a fuel in a turbocharged piston engine. The surface temperature of the surfaces limiting the gas rises to a high level and the crust forming on the surfaces is especially hard. The properties of the crust vary according to the composition of the fuel; with vanadium- and sodium-containing heavy fuel oils the problem is especially considerable.

Thus, an especial problem area is the clearance area between the blades of the turbine and the turbine housing. In uncooled compressors the hard crust accumulating on this area causes wear on the turbine blades and simultaneously also reduces the flow area. When the crust is periodically removed by cleaning, the clearance has grown excessively, whereby the operation of the turbine is degraded.

The aim of the invention is to produce a turbo compressor arrangement in connection with a piston engine by means of which the problems associated with prior art can be reduced. An especial aim of the invention is to produce a turbo compressor arrangement by means of which the forming of crust in the clearance area of the turbine blades can be reduced.

The aims of the invention are mainly achieved as disclosed in the appended claims 1 and 7 and more closely explained in other claims.

In this application the term clearance area means the area of the turbine housing over which the turbine blades extend and/or move as the apparatus is used.

A turbo compressor arrangement according to the invention in connection with a piston engine comprises a compressor unit and a turbine unit connected to each other, in which the turbine unit comprises a turbine wheel having blades and a turbine housing enclosing the turbine wheel and the blades at a distance therefrom. In the arrangement, a cooling space for a cooling medium has been arranged in the turbine housing, substantially adjacent the tips of the turbine blades for a confined cooling of the turbine housing and for preventing the forming of crust. Thereby the detrimental forming of hard crust in the clearance area and thus also the premature wear of the turbine blades can be avoided. Thus, the cooling space is limited to the clearance area of the turbine blades and the turbine housing.

A turbine housing according to one embodiment of the invention comprises a diffuser limiting the flow space of the gas in the turbine and a body part into which the diffuser is attached. Thus, the cooling space is preferably arranged between the diffuser and the body part and the surface delimiting the gas flow space of the diffuser is cooled.

The arrangement additionally comprises a cooling medium outlet opening or openings for introducing the cooling medium into the gas space of the turbine. This is an advantageous way, because it allows the recovery of heat from the hot medium, otherwise it could be considered that the medium is introduced into some other place.

Preferably the arrangement comprises a flow channel connecting the pressure side of the compressor unit and the cooling space of the turbine, whereby the cooling medium is air pressurized in the compressor unit. This is a very preferable way of arranging the cooling, because usually the air is in a suitable temperature and pressure after the compressor unit, and it is easily available for this use in adequate quantities. The flow channel is preferably formed internally to be in connection with the turbo compressor arrangement.

In a method according to the invention in connection with a piston engine having a turbo compressor arrangement, in which the turbo compressor arrangement comprises a compressor unit feeding air in elevated pressure to the piston engine, and a turbine unit that receives exhaust gas from the internal combustion engine and creates motive power for the turbine unit, the turbine unit is cooled in a limited manner by introducing air into the cooling space arranged in the turbine unit at a temperature 100-200°C lower than the exhaust gas outlet temperature after the turbine unit.

The turbine unit is cooled by introducing air from the compressor unit to the cooling space arranged in the turbine unit. Preferably air is introduced from the compressor unit to the turbine unit internally in the turbo compressor arrangement.

In the following the invention is described by way of example and with reference to the appended schematic drawings, of which
- figure 1 shows a turbo compressor arrangement according to the invention in connection with a piston engine,
- figure 2 shows a turbo compressor arrangement, and
- figure 3 shows another turbo compressor arrangement.

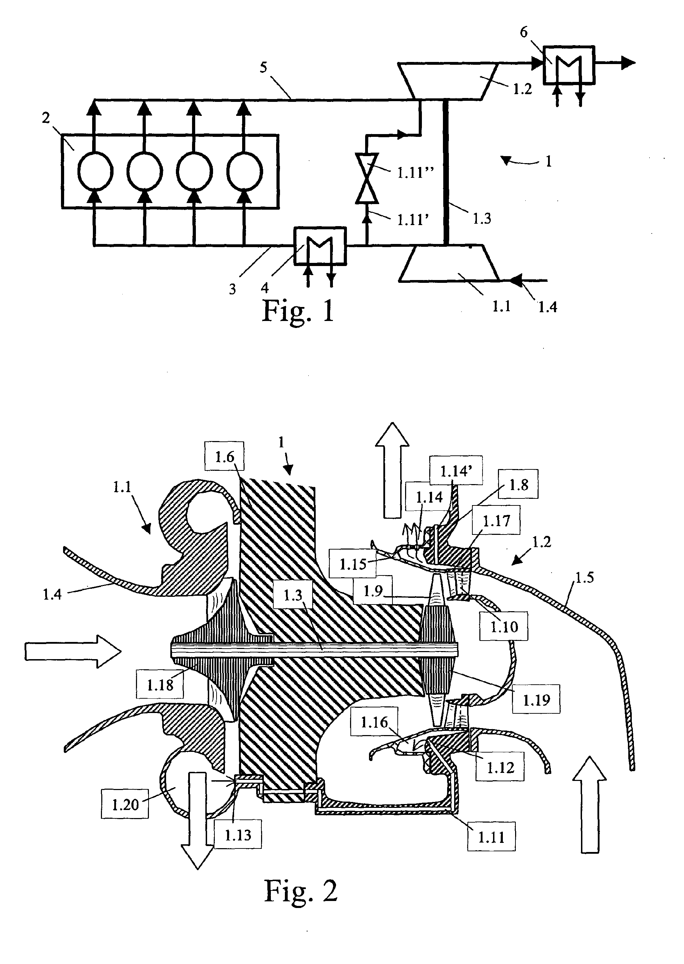

With reference to figure 1, the turbo compressor arrangement 1 according to the invention is used in connection with a piston engine 2. The compressor arrangement comprises a compressor unit 1.1 and a turbine unit 1.2. These are connected to each other by means of a drive shaft 1.3. The turbo compressor arrangement is connected to the piston engine 2 via an air inlet channel 3, connected to the pressure side of the compressor unit 1.1. A heat exchanger unit 4 is arranged in connection with the inlet channel for cooling the air prior to its introduction into the piston engine 2. The turbine unit 1.2 of the turbo compressor arrangement is connected to the engine via the exhaust gas channel 5.

When running the engine, air is introduced into the compressor unit 1.1 via intake channel 1.4. The compressor unit 1.1 increases the air temperature and pressure and feeds air to the engine 2 via inlet channel 3. In the engine, air is used for combustion of the fuel and the produced exhaust gases are introduced via exhaust gas channel to the turbine unit 1.2 of the turbo compressor arrangement 1 via the inlet channel 1.5 thereof. In the turbine unit the exhaust produces work for running the compressor unit.

Figure 2 illustrates in closer detail a preferable embodiment of a turbo compressor arrangement according to the invention. In this embodiment the compressor unit 1.1 and the turbine unit 1.2 are connected to each other via a bearing body 1.6. A drive shaft 1.3 is supported on the bearing body by bearings, a turbine wheel 1.9 and a compressor wheel 1.18 being attached to the ends of the shaft. The figure also shows the flow directions of the air fed into the engine as arrows as well as the flow directions of the exhaust gases emitted from the engine.

As can be seen in figure 1, exhaust gases are directed from the turbine unit 1.2 further to the exhaust gas boiler 6. It is not desired to unnecessarily decrease the temperature of the exhaust gases and therefore the turbine unit is not substantially cooled. The components of the fuel that were vaporized during combustion and have reacted with oxygen and possibly other substances tend to form crust on the surfaces, especially use of heavy fuel oil as fuel the tends to form large crust. Especially the clearance area of the tips of the blades 1.9 of the turbine and the diffuser 1.15 is a critical area in this respect. In a turbo compressor arrangement according to the invention a confined cooling space 1.16 has been arranged in connection with the turbine housing 1.8, 1.15 on an area located on the clearance area. Thus, the turbo compressor arrangement itself is not cooled, but in the area of the tips of the turbine blades the surface of the diffuser is locally cooled. The cooling space 1.1 is here formed by means of a body part 1.8, a nozzle ring 1.17 and a diffuser 1.15. Here, the nozzle ring 1.17 is fastened to the body part 1.8 by using the diffuser 1.15. In order to avoid formation of crust on the surface of the diffuser, pressurized air is led from the compressor unit in a suitable temperature and pressure to cool the diffuser 1.15 locally and thereby in a confined manner. The construction in figure 2 is for reference only, and it is essential that cooling has been arranged in the area of the clearance of the turbine blades, i.e. space is not necessarily needed between the nozzle ring and the body part. A confined cooling according to the basic idea of the invention is here accomplished, for practical reasons, by means of utilizing the diffuser and therefore the cooling space in a solution according to the figure extends farther than necessary.

Figure 1 shows diagrammatically the flow channel 1.11' connecting the turbine unit and the compressor unit. The flow channel 1.11' extends from the pressure side of the compressor unit to the cooling space of the turbine (not shown in figure 1). A restriction means has here been arranged in the flow channel, such as valve 1.11 ", by means of which the air flow rate can be adjusted to suit, preferably by one-off adjusting. Figure 2 also shows a flow channel 1. 11, arranged in connection with the structure of the actual turbo compressor arrangement. The flow channel extends from the first opening 1.13 opening into the chamber 1.20 of the compressor to the second opening 1.12 opening into the cooling space 1.16. If necessary, a larger number of openings and flow channels can be arranged, mainly if the necessary amount of air or the construction requires it. Air is discharged from the cooling space into the gas space of the turbine via outlet openings 1.14 arranged in the diffuser 1.15. The outlet openings can naturally be arranged in the body part instead of the diffuser, as is shown with reference number 1.14.

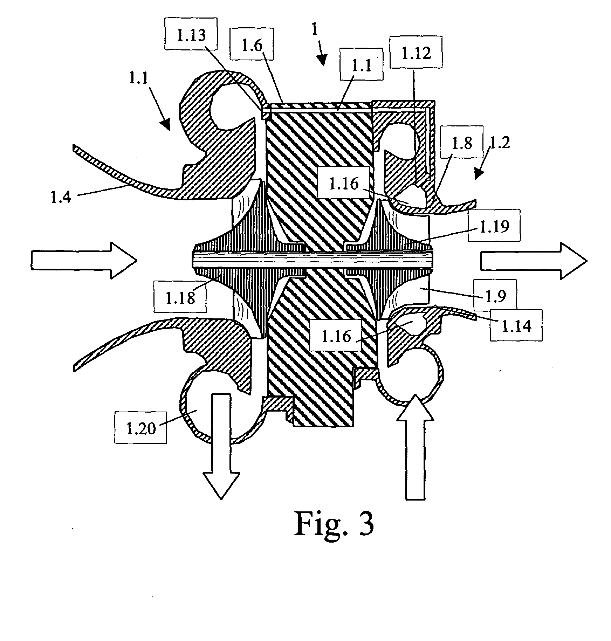

Figure 3 illustrates an application of the arrangement according to the invention in connection with a turbo compressor arrangement having a radial turbine. In this figure the reference numbers correspond to those in figure 2. The basic idea of this application is similar to that of the axial turbine of figure 2, but in a radial turbine the clearance area is much larger, i.e. the blades 1.9 are close to the body structure 1.8 for a longer distance. Here, the cooling space 1.16 accomplishing the confined cooling corresponds relatively closely to the clearance area.

Typically, the temperature of the exhaust gas entering the turbine is of the order of 550 °C and 350 °C subsequent to the turbine unit. According to the invention, the turbine unit is locally cooled by introducing air into the cooling space at a temperature 100 - 200 °C lower than the outlet temperature of the turbine unit. The space of air flowing via flow channel 1.11, 1.11' is adjusted suitable for each turbine construction and circumstances. This is preferably accomplished so that air is introduced from the compressor unit to the turbine unit. Air is supplied at a temperature suitable for this use subsequent to the compressor unit and the pressure is also sufficient for causing the flow.

The invention is not limited to the embodiments described here, but a number of modifications thereof can be conceived of within the scope of the appended claims.

## Claims

1. A turbo compressor arrangement (1) in connection with a piston engine (2), the arrangement comprising a compressor unit (1.1) and a turbine unit (1.2) connected to each other, wherein the turbine unit comprises a turbine wheel (1.19) having blades (1.9) and a turbine housing (1.8, 1.15) enclosing the turbine wheel and the blades at a distance therefrom, **characterized in that** a cooling space (1.16) for a cooling medium has been arranged substantially adjacent the tips of the turbine blades (1.9) for cooling the turbine housing (1.8, 1.15) and avoiding the forming of crust.

2. A turbo compressor arrangement (1) according to claim 1, **characterized in that** the cooling space (1.16) is restricted to the clearance area between the turbine blades (1,9) and the turbine housing (1.8, 1,15).

3. A turbo compressor arrangement (1) according to claim 1, **characterized in that** the turbine housing comprises a diffuser (1.15) limiting the gas flow space in the turbine and a body part (1.8), to which the diffuser is attached, whereby the cooling space (1.16) is arranged between the diffuser and the body part, whereby the surface delimiting the flow space of the diffuser is cooled.

4. A turbo compressor arrangement according to claim 1, **characterized in that** the arrangement comprises a flow channel (1.11, 1.11') connecting the pressure side of the compressor unit and the cooling space of the turbine (1.16), whereby the cooling medium is air pressurized in the compressor unit.

5. A turbo compressor arrangement according to claim 4, **characterized in that** the arrangement comprises an outlet opening or outlet openings (1.14, 1,14') for directing the cooling medium to the gas space of the turbine.

6. A turbo compressor arrangement according to claim 4, **characterized in that** the flow channel (1.11) is formed in internally in connection with the turbo compressor arrangement (1.1).

7. A method in connection with a piston engine having a turbo compressor arrangement (1), in which the turbo compressor arrangement comprises a compressor unit (1.1) feeding air in elevated pressure to the piston engine, and a turbine unit (1.2) that receives exhaust gas from the internal combustion engine and creates motive power for the turbine unit, **characterized in that** the turbine unit (1.1) is cooled in a confined manner by introducing air into the cooling space (1.16) arranged in the turbine unit at a temperature 100-200°C lower than the exhaust gas outlet temperature after the turbine unit.

8. A method according to claim 7, **characterized in that** the turbine unit (1.2) is cooled by introducing air into the cooling space (1.16) from the compressor unit (1.1).

9. A method according to claim 7, **characterized in that** air is introduced from the compressor unit (1.6) to the turbine unit (1.1) internally in the turbo compressor arrangement.
